# EUROPÄISCHE PATENTSCHRIFT

(11) **EP 2 201 643 B1**
(45) Veröffentlichungstag und Bekanntmachung des Hinweises auf die Patenterteilung: **29.02.2012**
(21) Anmeldenummer: 08839690.8
(22) Anmeldetag: 16.10.2008
(51) Int. Cl.: H01Q 1/32, H01Q 1/38, B60R 1/12, H05K 1/11

(54) **VERFAHREN ZUR HERSTELLUNG EINER FAHRZEUGANTENNENEINRICHTUNG**
METHOD FOR PRODUCING A VEHICLE ANTENNA DEVICE
PROCÉDÉ DE PRODUCTION D'UN SYSTÈME D'ANTENNE DE VÉHICULE

(30) Priorität: 16.10.2007 DE 102007049433; 21.12.2007 DE 102007062142
(43) Veröffentlichungstag der Anmeldung: 30.06.2010
(73) Patentinhaber: Hirschmann Car Communication GmbH, 72654 Neckartenzlingen (DE)
(72) Erfinder: DAUM, Uwe, 70794 Filderstadt (DE); KREISSIG, Uwe, 73107 Eschenbach (DE); PFLETSCHINGER, Markus, 72800 Eningen (DE); SCHWARZ, Bernd, 72141 Walddorf-Häslach (DE)
(74) Vertreter: Greif, Thomas
(86) Internationale Anmeldenummer: PCT/EP2008/008776
(87) Internationale Veröffentlichungsnummer: WO 2009/049891

(56) Entgegenhaltungen:
- EP-A- 1 760 825
- DE-A1-102005 009 443
- DE-C- 972 393

## Beschreibung

Die Erfindung betrifft ein Verfahren zur Herstellung einer Fahrzeugantenneneinrichtung sowie eine danach hergestellte Fahrzeugantenneneinrichtung gemäß den Merkmalen des jeweiligen Oberbegriffes der unabhängigen Patentansprüche.

Es sind Verfahren zur Herstellung von Fahrzeugantennenrichtungen bekannt, die eine Trägerfolie aus einem elektrisch nicht leitfähigen Material aufweisen, bekannte, wobei auf die Trägerfolie Antennenstrukturen in der gewünschten Form sowie Erstreckung aus einem elektrisch leitfähigen Material aufgebracht werden. Außerdem werden auf der Trägerfolie eine oder mehrere Zuleitungen aufgebracht, über die die Antennenstruktur bzw. mehrere Antennenstrukturen mit einem elektronischen Gerät, insbesondere einem Antennenverstärker, verbunden werden. Dies hat jedoch den Nachteil, dass zusätzlich Trägerfolie und die darauf befindlichen Zuleitungen hergestellt werden müssen, um die Fahrzeugantenneneinrichtung mit dem elektronischen Gerät verbinden zu können.

Ein gattungsgemäßes Verfahren ist aus der DE 10 2005 009 443 A1 bekannt.

Der Erfindung liegt daher die Aufgabe zu Grunde, ein Verfahren zur Herstellung einer Fahrzeugantenneneinrichtung und eine danach hergestellte Fahrzeugantenneneinrichtung bereitzustellen, die hinsichtlich ihrer Herstellung, ihrer Lagerhaltung und auch hinsichtlich der Montage weiter verbessert ist.

Diese Aufgabe ist durch die Merkmale der unabhängigen Patentansprüche gelöst.

Das Verfahren zur Herstellung der Fahrzeugantenneneinrichtung beinhaltet unter anderem, dass an einem Fußpunkt der Antennenstruktur ein Steckverbinder oder ein elektronisches Gerät an der Trägerfolie befestigt und elektrisch kontaktiert wird. Das hat den Vorteil, dass der Steckverbinder bzw. das elektronische Gerät, vorzugsweise ein Antennenverstärker, direkt an dem Ort mit dem Fußpunkt der Antennenstruktur auf der Trägerfolie befestigt und elektrisch kontaktiert wird, an dem die empfangenen hochfrequenten Signale über den Steckverbinder weitergeleitet oder direkt von dem elektronischen Gerät weiter verarbeitet werden sollen. Damit können in vorteilhafter Weise Zuleitungen, die auch Einstrahlungen von Störsignalen ermöglichen würden, entfallen. Insgesamt baut dadurch die erfindungsgemäße Fahrzeugantenneneinrichtung wesentlich kompakter. Hinsichtlich der Lagerhaltung einer solchen Fahrzeugantenneneinrichtung, das heißt, nach ihrer Herstellung und vor ihrer Montage in einem Fahrzeug ist eine weitere Vereinfachung gegeben, da die Antennenstruktur zusammen vorzugsweise mit dem elektronischen Gerät ein einziges Bauteil bilden, folglich mit einer einzigen Bauteilnummer versehen werden müssen, so dass sich dadurch insgesamt auch die Logistik vereinfacht. Ebenfalls wird die Montage einer solchen Fahrzeugantenneneinrichtung vereinfacht, da nur noch das kompakt bauende Teil montiert werden muss, welches zugleich aus Empfangsantenne (und/oder Sendeantenne) mit zugehörigem Steckverbinder bzw. mit zugehörigen elektronischem Gerät besteht.

Weitere Ausgestaltungen der Erfindung sind in den Unteransprüchen angegeben, wobei diese weiteren Ausgestaltungen anhand der folgenden Beschreibung unter Zuhilfenahme der in den Figuren gezeigten Ausführungsbeispielen näher erläutert wird.

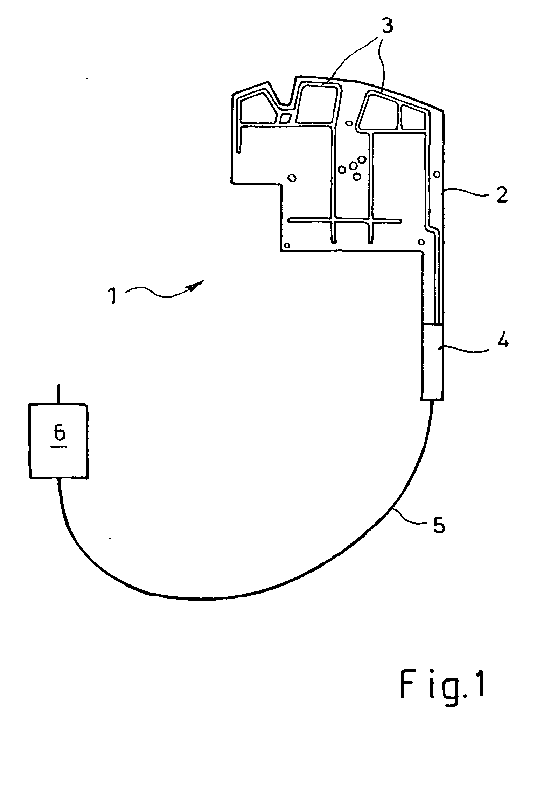

Figur 1 zeigt, soweit im Einzelnen dargestellt, eine Fahrzeugantenneneinrichtung 1, bei der auf einer Trägerfolie 2 aus einem elektrisch nicht leitfähigem Material, insbesondere einer flexiblen Kunststofffolie, eine oder mehrere Antennenstrukturen 3 aufgebracht sind. Das Aufbringen der Antennenstrukturen 3 erfolgt durch einen Aufdruck, z.B. Siebdruck, einer elektrisch leitfähigen Paste, vorzugsweise einer Silberpolymerpaste, auf die flächige Trägerfolie 2. Andere Materialien für die Antennenstrukturen 3 sind denkbar. Von der Trägerfolie 2 steht eine Lasche ab, wobei an der Lasche ein Steckverbinder 4 am Ende der Antennenstruktur 3, die den Fußpunkt bildet, angeordnet ist. Gleichzeitig ist ein hier nicht dargestellter Kontaktpartner des Steckverbinders 4 mit dem Fußpunkt der Antennenstruktur 3 mechanisch und elektrisch verbunden. Dies kann beispielsweise durch einen Crimp-, Löt- oder anderen Vorgang erfolgen. Über den Steckverbinder 4 ist die Fahrzeugantenneneinrichtung 1 über ein Kabel 5, vorzugsweise ein Koaxialkabel, mit einem nachgeschalteten elektronischen Gerät, beispielsweise einen Antennenverstärker, ein Impedanzwandler, ein Empfänger oder dergleichen, verbunden. Die in Figur 1 gezeigte Fahrzeugantenneneinrichtung 1 stellt die einfachste Ausführungsform der erfindungsgemäßen Fahrzeugantenneneinrichtung 1 dar, wobei die Trägerfolie 2 schon mit Aussparungen in der äußeren Kontur sowie mit Aussparungen, insbesondere runden Öffnungen, versehen ist, mit denen die Trägerfolie 2 am gewünschten Einbauort lagefixiert und befestigt wird. Die Konturgebung der Trägerfolie 2 kann beispielsweise durch Ausschneiden oder Ausstanzen eines größeren Bereiches einer Trägerfolie erfolgen.

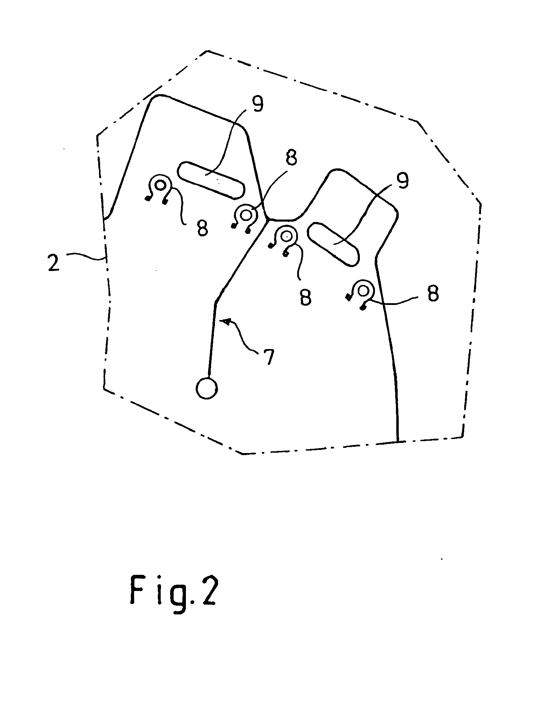

Die weitere Ausgestaltung der Erfindung ist in Figur 2 dargestellt. Die Trägerfolie 2 wird dabei erfindungsgemäß, bevor oder nachdem der Steckverbinder 4 bzw. das elektronische Gerät 6, angeordnet worden sind, mit zumindest einem Trennschnitt 7 versehen, wodurch die Trägerfolie 2 in zumindest zwei voneinander unabhängige bewegbare, aber untereinander noch verbundene Teilflächen aufgeteilt wird. Dieser Trennschnitt kann ebenfalls durch einen Schneid- oder Stanzvorgang erfolgen. Andere Verfahren zur Erzielung der beschriebenen Wirkung sind dabei ebenfalls denkbar. Der Trennschnitt 7erfolgt vorzugsweise von einer Seitenkante der Trägerfolie 2 in Richtung des innen liegenden Bereiches der Trägerfolie 2, so dass zumindest zwei oder mehr voneinander unabhängig bewegbare, aber untereinander noch verbundene Teilflächen entstehen. Durch diesen Trennschnitt 7 in der Trägerfolie 2 kann durch Überlappung der miteinander noch verbundenen Teilflächen im montierten Zustand eine zusätzliche Eigenversteifung und werkzeuglose Formgebung erreicht werden, indem die zumindest zwei untereinander noch verbundenen Teilflächen umgeklappt, vorzugsweise flächig aufeinander gelegt werden. Dadurch erfolgt eine dreidimensionale Anpassung der an sich flächigen Trägerfolie 2 an den gewünschten Bauraum werkzeuglos durch diese beschriebene "Falttechnik". Damit die derart bearbeitete Trägerfolie 2 an dem gewünschten Einbauort montiert werden kann, wird sie mit zumindest einem Befestigungspunkt 8, vorzugsweise mehreren Befestigungspunkte 8, versehen. Erfindungsgemäß ist dabei vorgesehen, dass der zumindest eine Befestigungspunkt 8 ausgestanzt wird, wobei der zur Bildung des Befestigungspunktes 8 ausgestanzte Bereich der Trägerfolie 2 an dieser verbleibt und zumindest beim Befestigungsvorgang weggeklappt wird. Dies hat den Vorteil, dass keine Abfälle von Trägerfolienteile beim Ausstanzen der Befestigungspunkte 8 entstehen. Außerdem stören die weggeklappten und an der Trägerfolie 2 verbleibenden ausgestanzten Bereiche der Befestigungspunkte 8 nicht die spätere Funktion der Fahrzeugantenneneinrichtung 1. Zwecks Führung bei der Montage der vorbereiteten Trägerfolie 2 und/oder zur genauen Formgebung insbesondere beim Überlappen der untereinander noch verbundenen Teilflächen der Trägerfolie 2 sind Aussparungen 9 vorgesehen, so dass durch bündige Überlappung der Aussparungen 9 die korrekte Lage der untereinander noch verbundenen Teilflächen der Trägerfolie 2 zueinander beim Ausführen der "Falttechnik" sicher gestellt ist. Außerdem können die Aussparungen 9, vorzugsweise in überlapptem Zustand der Teilflächen der Trägerfolie 2, der Führung und Lagefixierung der Trägerfolie 2 am gewünschten Einbauort dienen.

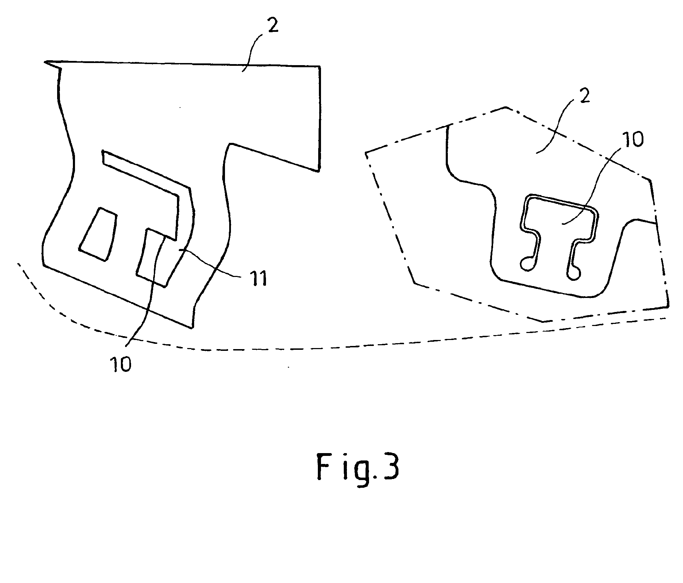

In Figur 3 ist gezeigt, dass die Trägerfolie 2 mit zumindest einer weiteren Aussparung 11 in der Trägerfolie 2 versehen wird, wobei dies auch beispielsweise mittels seines Stanzvorgangs erfolgt. Dabei verbleibt innerhalb der Aussparung 11 ein ausgestanzter Bereich der Trägerfolie 2 als Befestigungslasche 10, mit dem die Trägerfolie 2 an dem gewünschten Einbauort befestigt wird. In der linken Darstellung der Figur 3 ist erkennbar, dass die Befestigungslasche 10 in etwa T-förmig ausgebildet ist, wobei Teilbereiche der Trägerfolie 2 ausgestanzt und entfernt werden. Es ist denkbar, dass die verbleibende Befestigungslasche 10 in sich zumindest noch einmal zwecks Versteifung umgefaltet wird. In der rechten Darstellung der Figur 3 ist erkennbar, dass nur die Befestigungslasche 10 ausgestanzt wird, wobei sich nach Wegklappen der ausgestanzten Befestigungslasche 10 die hier nicht näher bezeichnete Aussparung 11 einstellt. Die Befestigungslasche 11, insbesondere auch mehrere an den erforderlichen Stellen vorgesehenen Befestigungslaschen 11, hat den Vorteil, dass die Trägerfolie 2 durch Einhängen und vorzugsweise auch durch Verrasten oder Verspannen mit einem Fahrzeugbauteil befestigt werden kann. Dieser Vorteil ist insbesondere dann gegeben, wenn z.B. zwei gegenüberliegende Befestigungslaschen 11 das Fahrzeugbauteil unter Vorspannung umfassen. Ergänzend oder alternativ zu einer kraftschlüssigen Verbindung der Befestigungslaschen 11 mit dem Fahrzeugbauteil ist es denkbar, dass die Fahrzeugantenneneinrichtung 1 über die Befestigungslaschen 11 mit dem Fahrzeugbauteil formschlüssig, beispielsweise durch einen Klebevorgang, verbunden werden.

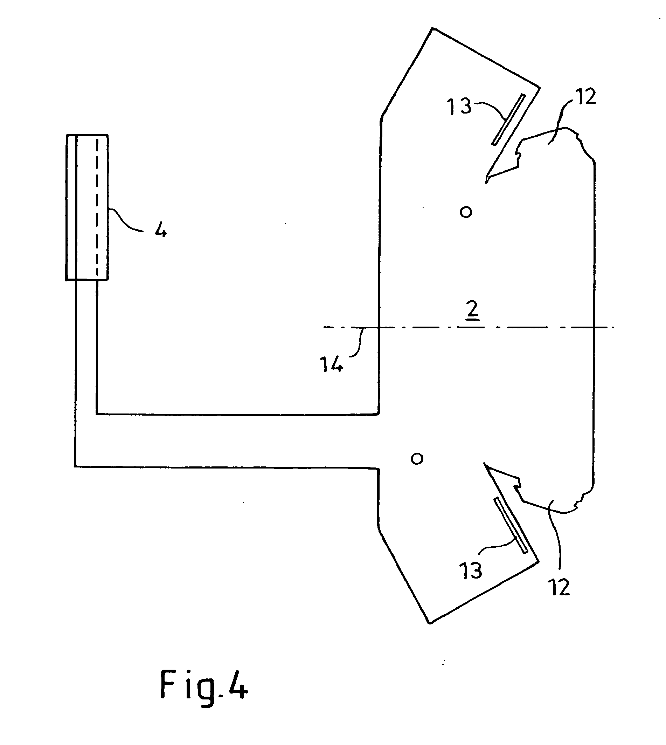

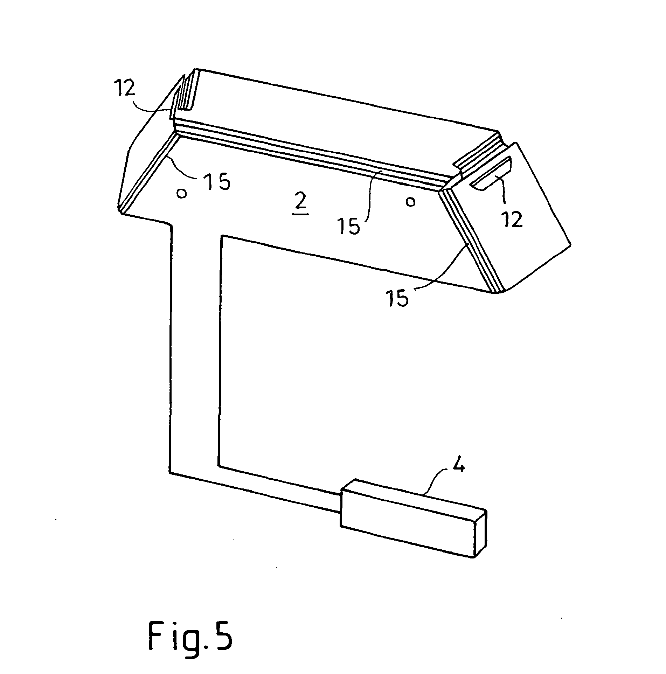

In den Figuren 3 und 4 einerseits und 5 bis 7 andererseits ist gezeigt, dass vor oder nach dem Anbringen des Steckverbinders 4 oder des elektronischen Gerätes 6 die flächige Trägerfolie 2 mit zumindest einer abstehenden Lasche 12, vorzugsweise mehreren abstehenden Laschen 12, versehen wird. Dabei hat die noch flächige Trägerfolie 2 nicht diejenige Form, die den gewünschten dreidimensionalen Einbauort entspricht. Dazu wird zwecks Formgebung der später dreidimensionalen Fahrzeugantenneneinrichtung 1 zu der zumindest einen abstehenden Lasche 12 ein Einschnitt 13 in die Trägerfolie 2 eingebracht, in die die zumindest eine Lasche 12 eingesteckt wird, nachdem die Trägerfolie 2 symmetrisch oder asymmetrisch zu einer Symmetrieachse 14 der Trägerfolie 2 verformt, d.h. umgebogen oder abgewinkelt wurde. Diese Verformung erfolgt beispielsweise mit einem kleinen oder großen Wiegeradius entlang einer Faltlinie 15, wobei es auch denkbar ist, dass die Verformung in einem bestimmten Winkel, vorzugsweise einem rechten Winkel, erfolgt. Diese Verformung ist in Figur 5 dargestellt, wobei erkennbar ist, dass die abstehenden Laschen 12 relativ zu dem verbleibenden Teilbereich der Trägerfolie 2 umgeklappt worden sind, wobei bei diesem Ausführungsbeispiel auch Teilbereiche der Trägerfolie 2 umgeklappt worden sind, in denen sich die zugehörigen Einschnitte 13 befinden. Die abstehenden Laschen 12 können mit ihrem vorderen freien Ende durch die Einschnitte 13 geführt werden, wobei in besonders vorteilhafter Weise der freie vordere Bereich der abstehenden Lasche 12 hakenförmig ausgebildet ist, sodass der nach außen abstehende Haken, vorzugsweise mehrere Haken der abstehenden Lasche 12, die Trägerfolie 2 nach dem Durchführen der Lasche 12 durch den Einschnitt 13 hintergreift und somit dieser vordere Bereich der abstehenden Lasche 12 festgelegt wird. Zwecks einfacher Einführung der abstehenden Lasche 12 durch den Einschnitt 13 ist das vordere Ende mit einer Abschrägung versehen. Aufgrund dieser beschriebenen Vorgehensweise lässt sich aus einer zunächst flächigen Trägerfolie 2 eine in diesem Fall in etwa schachtelförmige Antenneneinrichtung herstellen, wobei die inneren bzw. äußeren Konturen dieser jetzt dreidimensional geformten Trägerfolie 2 vorzugsweise den gewünschten Einbauort entsprechen. Je nach Anzahl der abstehenden Laschen 12, der vorhandenen Faltlinien 15 und der vorzunehmenden Faltvorgänge lassen sich nahezu beliebig komplexe dreidimensionale Formen der vorher noch flächigen Trägerfolie 2 erzielen.

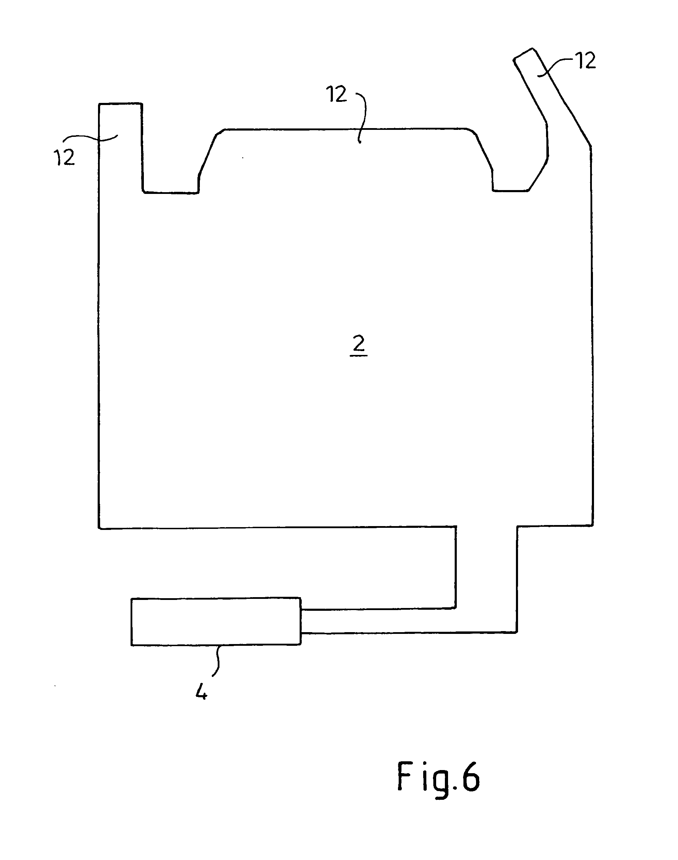

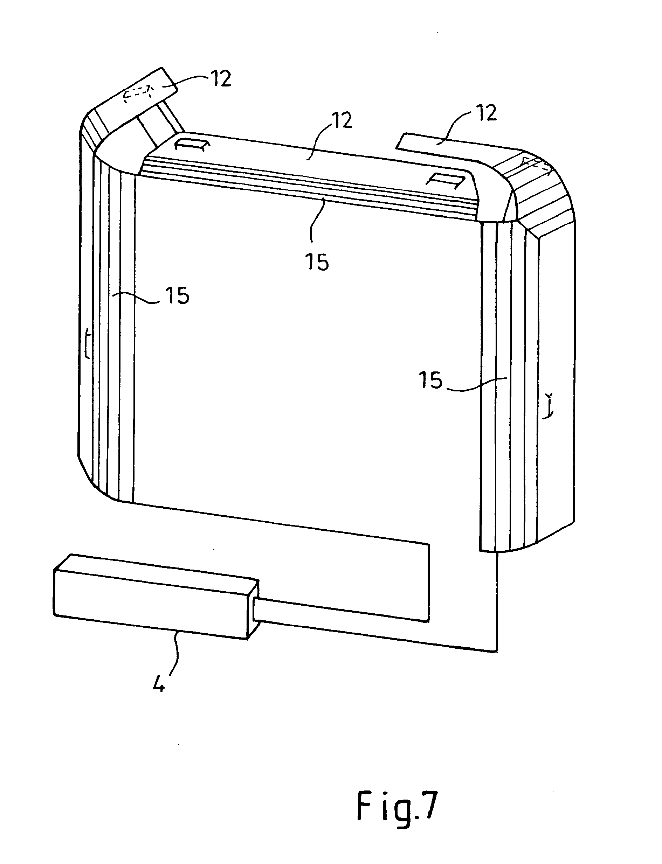

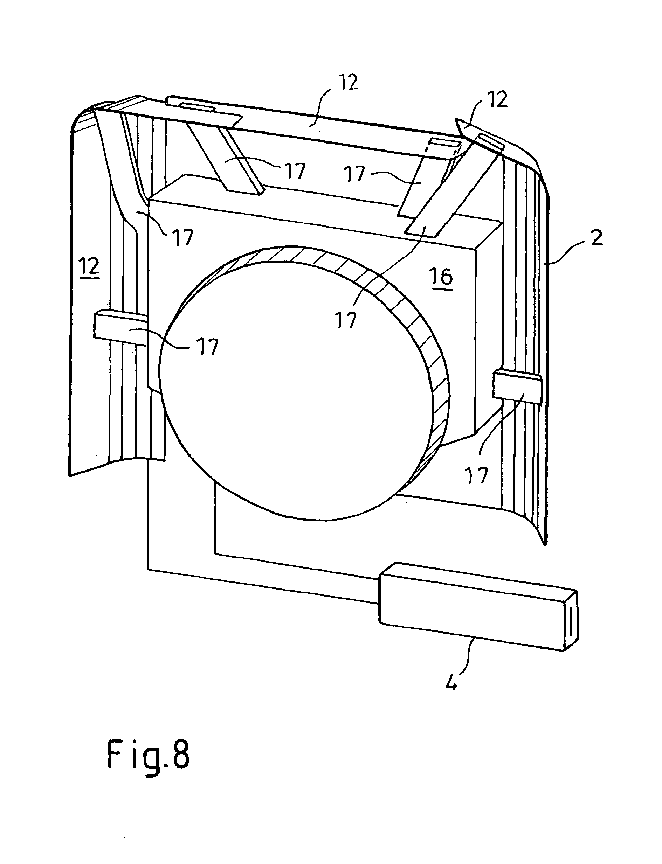

Eine etwas komplexere Gestaltung der Trägerfolie 2 ist anhand der Figuren 6 bis 8 dargestellt. Auch hier ist die Trägerfolie 2 wieder mit mehreren abstehenden Laschen 12 versehen, wobei Teilbereiche der Trägerfolie 2 entlang von Faltlinien 15 in diesem Fall nicht umgeklappt, sondern umgebogen werden, sodass entlang der Faltlinien 15 kein scharfer, sondern ein gerundeter Verformungsbereich entsteht. Nachdem ausgehend von der zunächst flächigen Trägerfolie 2 (Figur 6) die Trägerfolie 2 dreidimensional verformt wurde (Figur 7), erfolgt die Anbringung der derart dreidimensional verformten Trägerfolie 2 an einem Fahrzeugbauteil 16 (Figur 8). In einer ersten, hier nicht dargestellten Variante ist es denkbar, dass beispielsweise die umgebogenen Teilflächen der Trägerfolie 2 das Fahrzeugbauteil 16 zumindest teilweise, insbesondere vollständig an seinen Seitenkanten umfassen, sodass durch einen solchen Formschluss die Trägerfolie 2 an dem Fahrzeugbauteil 16 festgelegt wird. In dem in Figur 8 dargestellten Ausführungsbeispiel weist das Fahrzeugbauteil 16 nach außen weisende Streben 17 auf, wobei diese Streben 17 in ihrem Endbereich mit den umgeformten Teilflächen der Trägerfolie 2 verbunden werden. Dies kann durch Kraftschluss und/oder durch Formschluss erfolgen. Außerdem ist es denkbar, dass die Streben 17 eigenständige Bauteile sind, mit denen die Trägerfolie 2 mit dem Fahrzeugbauteil 16 verbunden wird.

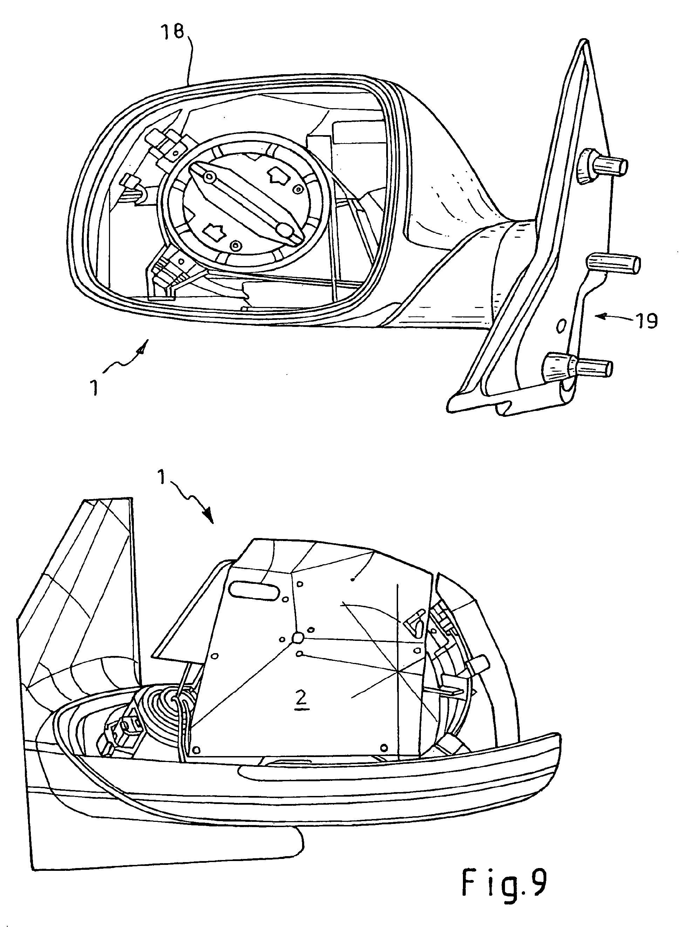

In der Figur 9 ist eine besonders bevorzugte Ausgestaltung der Fahrzeugantenneneinrichtung 1 gezeigt, die nach dem erfindungsgemäßen Verfahren hergestellt worden ist. Die dreidimensional vorbereitete Trägerfolie 2 wird in eine Form gebracht, die dem hier gewünschten Einbauort, nämlich innerhalb eines Gehäuses eines Außenspiegels 18 eines Fahrzeuges, entspricht. Dabei sind die inneren Konturen des Gehäuses des Außenspiegels 18 äußerst komplex (gewölbt) und es steht wenig Bauraum zur Verfügung weil innerhalb des Gehäuses des Außenspiegels 18 nicht nur die Fahrzeugantenneneinrichtung 1 unterzubringen ist, sondern auch der Verstellmechanismus für die Spiegelfläche des Außenspiegels 18 untergebracht ist. Diese beispielhafte Ausgestaltung eines Außenspiegels 18, der über eine Türbefestigung 19 mit einer hier nicht dargestellten Fahrzeugtür verbunden ist, ist im oberen Teil der Figur 9 dargestellt. Im unteren Teil der Figur 9 ist die Fahrzeugantenneneinrichtung 1 zu erkennen, die aus der komplex gestalteten Trägerfolie 2 besteht, die mittels der zuvor schon beschriebenen "Falttechnik° hergestellt worden ist. Dabei ist erkennbar, dass diese Fahrzeugantenneneinrichtung 1 mehrere Faltlinien sowie Befestigungspunkte und ggf. Aussparungen aufweist. Dieses Ausführungsbeispiel der Unterbringung der erfindungsgemäßen Fahrzeugantenneneinrichtung 1 in einen Außenspiegel 18 eines Fahrzeuges ist zwar bevorzugt, wobei aber auch andere Einbauorte innerhalb oder an von Fahrzeugbauteilen denkbar sind.

Schließlich ist noch darauf hinzuweisen, dass in den vorangegangenen Figuren gezeigt worden ist, dass am Fußpunkt der Antennenstruktur 3 (oder auch an den Fußpunkten mehrerer Antennenstrukturen) der Steckverbinder 4 angeordnet ist. Alternativ dazu kann anstelle des Steckverbinders 4 das elektronische Gerät 6, insbesondere der Antennenverstärker, direkt mit dem Fußpunkt der Antennenstruktur 3 (bzw. den Fußpunkten mehrerer Antennenstrukturen) verbunden sein, wobei in besonders vorteilhafter Weise das elektronische Gerät 6 sowie der Teilbereich der Trägerfolie 2, an dem das elektronische Gerät 6 (bzw. der Steckverbinder 4) angeordnet ist, mit einem Schutzgehäuse versehen wird. Dieses Schutzgehäuse ist entweder ein separates Bauteil wie z.B. zwei oder mehrere Gehäuseteile (vorzugsweise zwei Gehäusehälften). Daneben ist es denkbar, dass das Schutzgehäuse durch einen Spritzgussvorgang oder durch Umgießen, z.B. in einem Hot-Melt-Verfahren hergestellt wird.

Es wird noch darauf hingewiesen, dass die abstehenden Befestigungslaschen 12, die entweder durch entsprechendes Ausstanzen der flächigen Trägerfolie 2 entstehen oder durch das Vornehmen des Trennschnittes 7 gebildet werden, derart von dem weitestgehend flächig verbleibenden Teilbereich der Trägerfolie 2 durch Umklappen oder Umbiegen derart verformt werden, dass die Umformung der abstehenden äußeren Teilbereiche der Trägerfolie 2 bzw. der Laschen in einen gewünschten Winkel in Bezug auf den flächig verbleibenden Teil der Trägerfolie 2 erfolgt oder diese Verformung um 180 Grad erfolgt, sodass die flächig verbleibende Teilfläche der Trägerfolie 2 und die umgeformte Teilfläche aufeinander zu liegen kommen. In diesem Fall kann daran gedacht werden, die nach dem Umformvorgang aufeinander liegenden Teilflächen zusätzlich miteinander zu verbinden, beispielsweise miteinander zu verkleben. Außerdem ist es denkbar, dass die von der verbleibenden Teilfläche der Trägerfolie 2 abstehenden und umzuformenden Teilbereiche bzw. Befestigungslaschen derart umgeformt werden, dass sie mehrfach eckig oder bogenförmig umgeformt werden, sodass im letzteren Fall beispielsweise ein U-förmiges Profil im Querschnitt der umgeformten Teilflächen entsteht.

Im Zusammenhang mit dem Herstellverfahren bzw. mit der dach hergestellten Fahrzeugantenneneinrichtung sind noch folgende Merkmale zu nennen. Die direkte elektrische Kontaktierung des Fusspunktes der einen Antennenstruktur an den Steckverbinder oder an den Signaleingang des elektronischen Gerätes erfolgt, wie schon beschrieben, durch eine Crimpverbindung, alternativ durch eine Crimplötverbindung, durch einen Nietvorgang, mittels eines Action Pins, mittels eines Leitklebers oder dergleichen. Als Trägerfolie kommt auch eine organische Folie in Betracht, die auf einen Träger (z.B. eine Leiterplatte) aufkaschiert wird und anschließend die Bestückung des Trägers mit den Bauteilen, die der Realisierung der Funktion des elektronischen Gerätes dienen, erfolgt. Weiterhin sind die Trennschnitte, die Faltlinien, die zugehörigen Laschen und umgeklappten bzw. umgebogenen Teilflächen der Trägerfolie in einer Art und Weise symmetrisch ausgeführt, dass die daraus entstehenden Fahrzeugantenneneinrichtung spiegelbildlich herstellbar und montierbar sind. Dies gilt beispielsweise beim Einsatz einer solchen Fahrzeugantenneneinrichtung bei einem rechten und einem linken Aussenspiegel des Fahrzeuges. Das bedeutet entweder für beide Seiten des Fahrzeuges gleiche oder spiegelbildlich zueinander ausgeführte Fahrzeugantenneneinrichtungen. Die mit der einen Antennenstruktur bzw. den mehreren Antennenstrukturen zu empfangenden Frequenzen bzw. Frequenzbereiche (Bänder und deren Dienste wie Fernsehen, Mobilfunk, Radio und dergleichen) lassen sich ohne weiteres durch unterschiedlich auf der Trägerfolie angeordnete elektrisch leitfähige Strukturen realisieren. Ein weiterer Vorteil der Erfindung ist der einfache Transport und die kostengünstige Lagerung der fertigen, jedoch noch flächen. Trägerfolie mit den aufgebrachten Antennenstrukturen vom Hersteller zu dem Automobilhersteller, wobei die fertige Fahrzeugantenneneinrichtung letztlich erst kurz vor der Montage an ihrem Einbauort zusammengefaltet und zusammengesteckt werden muss.

### Bezugszeichenliste

- 1.: Fahrzeugantenneneinrichtung
- 2.: Trägerfolie
- 3.: Antennenstruktur(en)
- 4.: Steckverbinder
- 5.: Kabel
- 6.: elektronisches Gerät
- 7.: Trennschnitt
- 8.: Befestigungspunkt
- 9.: Aussparung
- 10.: Befestigungslasche
- 11.: Aussparung
- 12.: abstehende Lasche
- 13.: Einschnitt
- 14.: Symmetrieachse
- 15.: Faltlinie
- 16.: Fahrzeugbauteil
- 17.: Strebe
- 18.: Aussenspiegel
- 19.: Türbefestigung

## Patentansprüche

1. Verfahren zur Herstellung einer Fahrzeugantenneneinrichtung (1), die eine Trägerfolie (2) aus einem elektrisch nicht leitfähigen Material aufweist, wobei auf die Trägerfolie (2) Antennenstrukturen (3) aus einem elektrisch leitfähigen Material aufgebracht werden und an einem Fußpunkt der Antennenstruktur (3) ein Steckerverbinder (4) oder ein elektronisches Gerät (6) direkt an der Trägerfolie (2) befestigt und elektrisch kontaktiert wird, **dadurch gekennzeichnet, dass** das Aufbringen der Antennenstrukturen (3) durch einen Aufdruck_erfolgt und die Trägerfolie (2) mit zumindest einem Trennschnitt (7) versehen wird, wodurch die Trägerfolie (2) in zumindest zwei voneinander unabhängig, bewegbare, aber untereinander noch verbundene Teilflächen aufgetellt wird, wodurch eine dreidimensionale Anpassung der an sich flächigen Trägerfolie (2) an den gewünschten Bauraum werkzeuglos erfolgt.

2. Verfahren nach Anspruch 1, **dadurch gekennzeichnet, dass** vor oder nach dem Anbringen des Steckverbinders (4) oder des elektronischen Gerätes (6) die flächige Trägerfolie (2) mit zumindest einer abstehenden Lasche (12), vorzugsweise mit mehreren abstehenden Laschen (12) versehen wird.

3. Verfahren nach Anspruch 2, **dadurch gekennzeichnet, dass** zu der zumindest einen abstehenden Lasche (12) ein zugehöriger Einschnitt (13) in die Trägerfolie (2) eingebracht wird, in die die zumindest eine Lasche (12) eingesteckt wird, nachdem die Trägerfolie (2) entlang einer Faltlinie (15) verformt wurde.

4. Verfahren nach einem der vorhergehenden Ansprüche, **dadurch gekennzeichnet, dass** die Trägerfolie (2) mit zumindest einem Befestigungspunkt (8), insbesondere mehreren Befestigungspunkten (8), versehen wird.

5. Verfahren nach Anspruch 4, **dadurch gekennzeichnet, dass** der zumindest eine Befestigungspunkt (8) ausgestanzt wird, wobei der zur Bildung des Befestigungspunktes (8) ausgestanzte Bereich der Trägerfolie (2) an dieser verbleibt und weggeklappt wird.

6. Verfahren nach einem der vorhergehenden Ansprüche, **dadurch gekennzeichnet, dass** die Trägerfolie (2) mit zumindest einer Aussparung (9, 11) versehen wird.

7. Verfahren nach Anspruch 6, **dadurch gekennzeichnet, dass** innerhalb der Aussparung (11) ein ausgestanzter Bereich der Trägerfolie (2) als Befestigungslasche (10) an der Trägerfolie (2) verbleibt, mit dem die Trägerfolie (2) an einem Einbauort befestigt wird.

8. Verfahren nach einem der vorhergehenden Ansprüche, **dadurch gekennzeichnet, dass** der Steckverbinder (4) und/oder das elektronische Gerät (6) sowie der Teilbereich der Trägerfolie (2), an dem der Steckverbinder (4) und/oder das elektronische Gerät (6) angeordnet ist, mit einem Schutzgehäuse versehen wird.

9. Fahrzeugantenneneinrichtung (1), hergestellt nach einem der vorhergehenden Ansprüche.

## Claims

1. Method for producing a vehicle antenna device (1) which has a carrier film (2) made from an electrically non-conductive material, antenna structures (3) made from an electrically conductive material being applied to the carrier film (2) and a plug connector (4) or an electronic unit (6) being fastened directly and in a fashion making electrical contact on the carrier film (2) at a base point of the antenna structure (3), **characterized in that** the antenna structures (3) are applied by printing and the carrier film (2) is provided with at least one separating cut (7), as a result of which the carrier film (2) is divided into at least two regions which can be moved independently of one another but are still interconnected, as a result of which a three-dimensional adaptation of the inherently flat carrier film (2) to the desired installation space is achieved without a tool.

2. Method according to Claim 1, **characterized in that** before or after the plug connector (4) or the electronic unit (6) is mounted, the flat carrier film (2) is provided with at least one projecting tab (12), preferably with a plurality of projecting tabs (12).

3. Method according to Claim 2, **characterized in that** there is introduced into the carrier film (2) a cutout (13) which is associated with the at least one projecting tab (12) and into which the at least one tab (12) is plugged after the carrier film (2) has been deformed along a crease line (15).

4. Method according to one of the preceding claims, **characterized in that** the carrier film (2) is provided with at least one fastening point (8), in particular with a plurality of fastening points (8).

5. Method according to Claim 4, **characterized in that** the at least one fastening point (8) is punched out, the region of the carrier film (2) punched out in order to form the fastening point (8) remaining thereon and being folded away.

6. Method according to one of the preceding claims, **characterized in that** the carrier film (2) is provided with at least one opening (9, 11).

7. Method according to Claim 6, **characterized in that** inside the opening (11) there remains on the carrier film (2) as fastening tab (10) a punched-out region of the carrier film (2), with the aid of which the carrier film (2) is fastened at an installation location.

8. Method according to one of the preceding claims, **characterized in that** the plug connector (4) and/or the electronic unit (6) as well as the subregion of the carrier film (2) at which the plug connector (4) and/or the electronic unit (6) is arranged is provided with a protective housing.

9. Vehicle antenna device (1) produced according to one of the preceding claims.

## Revendications

1. Procédé de fabrication d'un dispositif (1) d'antenne de véhicule qui présente une feuille de support (2) en un matériau électriquement non conducteur,
des structures d'antenne (3) en un matériau électriquement conducteur étant appliquées sur la feuille de support (2) et une fiche de raccordement (4) ou un appareil électronique (6) étant fixées directement sur la feuille de support (2) et y étant raccordées électriquement en un point de pied de la structure d'antenne (3),
**caractérisé en ce que**
l'installation des structures d'antenne (3) s'effectue par impression et la feuille de support (2) est dotée d'au moins une découpe de séparation (7) grâce à laquelle la feuille de support (2) est divisée en au moins deux surfaces partielles aptes à être déplacées indépendamment l'une de l'autre mais encore reliées l'une à l'autre, ce qui permet d'effectuer, sans utiliser d'outil, une adaptation tridimensionnelle de la feuille de support (2) intrinsèquement plane à l'espace souhaité pour le montage.

2. Procédé selon la revendication 1, **caractérisé en ce que** la feuille de support plate (2) est dotée d'au moins une patte (12) en saillie et de préférence de plusieurs pattes (12) en saillie avant ou après l'installation de la fiche de raccordement (4) ou de l'appareil électronique (6).

3. Procédé selon la revendication 2, **caractérisé en ce qu'**une découpe (13) associée à la ou aux pattes (12) en saillie et dans laquelle la ou les pattes (12) sont enfichées est ménagée dans la feuille de support (2) après que la feuille de support (2) a été déformée le long d'une ligne de pliage (15).

4. Procédé selon l'une des revendications précédentes, **caractérisé en ce que** la feuille de support (2) est dotée d'au moins un point de fixation (8) et en particulier de plusieurs points de fixation (8).

5. Procédé selon la revendication 4, **caractérisé en ce que** le ou les points de fixation (8) sont estampés, la partie de la feuille de support (2) estampée pour former le point de fixation (8) restant sur cette dernière et étant enlevée par rabattement.

6. Procédé selon l'une des revendications précédentes, **caractérisé en ce que** la feuille de support (2) est dotée d'au moins une découpe (9, 11).

7. Procédé selon la revendication 6, **caractérisé en ce qu'**une partie estampée de la feuille de support (2) reste à l'intérieur de la découpe (11) de la feuille de support (2) comme patte de fixation (10) par laquelle la feuille de support (2) est fixée sur le site de son placement.

8. Procédé selon l'une des revendications précédentes, **caractérisé en ce que** la fiche de raccordement (4) et/ou l'appareil électronique (6) ainsi que la partie de la feuille de support (2) sur laquelle la fiche de raccordement (4) et/ou l'appareil électronique (6) sont disposés sont dotés d'un boîtier de protection.

9. Dispositif d'antenne (1) pour véhicule fabriqué selon l'une des revendications précédentes.
